# EUROPEAN PATENT APPLICATION

(11) **EP 4 561 184 A1**
(43) Date of publication of application: **28.05.2025**
(21) Application number: 22951472.4
(22) Date of filing: 19.07.2022
(51) Int. Cl.: H04W 48/08, H04W 48/16, H04W 28/20

(54) **INFORMATION TRANSMISSION METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: LI, Yanhua, Beijing 100085 (CN)
(74) Representative: Dehns Germany Partnerschaft mbB
(86) International application number: PCT/CN2022/106592
(87) International publication number: WO 2024/016194

(57) **Abstract**

Provided in the present application are an information transmission method and apparatus, a communication device, and a storage medium. The method comprises: a base station sending initial bandwidth part (BWP) configuration information which indicates an initial BWP of a target cell, wherein the initial BWP is used at least for a first-type user equipment (UE) to compare the initial BWP with the maximum channel bandwidth supported by the first-type UE, and determining, on the basis of a comparison result, whether the target cell allows the first-type UE to perform access, wherein the maximum channel bandwidth supported by the first-type UE is less than the maximum channel bandwidth supported by a second-type UE.

## Description

### TECHNICAL FIELD

The present disclosure relates to, but is not limited to, the field of communication technologies, and in particular relates to an information transmission method and apparatus, a communication device, and a storage medium.

### BACKGROUND

A reduced capability user equipment (UE), abbreviated as NR-lite or Redcap UE, is designed in the new radio (NR) to cover requirements of mid-range internet of things (IoT) devices. This type of equipment is similar to the IoT devices in the long term evolution (LTE) technology. The 5G based NR lite typically needs to meet the following requirements.
- Low cost and low complexity.
- Enhanced coverage to a certain extent.
- Power saving.
- Some terminals are (one receiving antenna) 1RX, some terminals are (two receiving antennas) 2RX.

### SUMMARY

Embodiments of the present disclosure disclose an information transmission method and apparatus, a communication device, and a storage medium.

According to a first aspect of the present disclosure, there is provided an information transmission method, performed by a base station, including:
sending initial bandwidth part (BWP) configuration information indicative of an initial BWP of a target cell, where the initial BWP is used for a first-type UE to compare the initial BWP with a maximum channel bandwidth supported by the first-type UE, and determine, at least based on a comparison result, whether the target cell allows access of the first-type UE, and the maximum channel bandwidth supported by the first-type UE is less than a maximum channel bandwidth supported by a second-type UE.

In an embodiment, when the maximum channel bandwidth supported by the first-type UE is less than the initial BWP, the target cell does not allow the access of the first-type UE.

In an embodiment, the initial BWP includes at least one of:
an initial BWP for the first-type UE; and
an initial BWP for the second-type UE.

In an embodiment, the sending the initial BWP configuration information indicative of the initial BWP of the target cell includes at least one of:
sending a first-type system information block carrying the initial BWP configuration information, where the initial BWP configuration information is used for indicating the initial BWP for the first-type UE, and/or the initial BWP for the second-type UE; and
sending a second-type system information block carrying the initial BWP configuration information, where the initial BWP configuration information is used for indicating the initial BWP for the first-type UE.

In an embodiment, the first-type system information block includes cell intra-frequency reselection identification information indicative of a cell reselection operation associated with the first-type UE; and/or
the second-type system information block includes cell intra-frequency reselection identification information indicative of a cell reselection operation associated with the first-type UE;
where the cell reselection operation includes intra-frequency cell reselection or non-intra-frequency cell reselection.

In an embodiment, the initial BWP includes an uplink initial BWP, where the uplink initial BWP is used at least for the first-type UE to compare the uplink initial BWP with a maximum uplink channel bandwidth supported by the first-type UE, and determine, based on a comparison result, whether the target cell allows the access of the first-type UE; and/or
the initial BWP includes a downlink initial BWP, where the downlink initial BWP is used at least for the first-type UE to compare the downlink initial BWP with a maximum downlink channel bandwidth supported by the first-type UE, and determine, based on a comparison result, whether the target cell allows the access of the first-type UE.

In an embodiment, the first-type UE includes an enhanced reduced capability UE.

According to a second aspect of the present disclosure, there is provided an information transmission method, performed by a first-type UE, including:
receiving initial BWP configuration information indicative of an initial BWP of a target cell, where the initial BWP is used for the first-type UE to compare the initial BWP with a maximum channel bandwidth supported by the first-type UE, and determine, at least based on a comparison result, whether the target cell allows access of the first-type UE, and the maximum channel bandwidth supported by the first-type UE is less than a maximum channel bandwidth supported by a second-type UE.

In an embodiment, the method further includes:
determining, in response to the maximum channel bandwidth supported by the first-type UE being less than the initial BWP, that the target cell does not allow the access of the first-type UE.

In an embodiment, the initial BWP includes at least one of:
an initial BWP for the first-type UE; and
an initial BWP for the second-type UE.

In an embodiment, the receiving the initial BWP configuration information indicative of the initial BWP of the target cell includes at least one of:
receiving a first-type system information block carrying the initial BWP configuration information, where the initial BWP configuration information is used for indicating the initial BWP for the first-type UE, and/or the initial BWP for the second-type UE; and
receiving a second-type system information block carrying the initial BWP configuration information, where the initial BWP configuration information is used for indicating the initial BWP for the first-type UE.

In an embodiment, the initial BWP includes an uplink initial BWP, where the uplink initial BWP is used at least for the first-type UE to compare the uplink initial BWP with a maximum uplink channel bandwidth supported by the first-type UE, and determine, based on a comparison result, whether the target cell allows the access of the first-type UE; and/or
the initial BWP includes a downlink initial BWP, where the downlink initial BWP is used at least for the first-type UE to compare the downlink initial BWP with a maximum downlink channel bandwidth supported by the first-type UE, and determine, based on a comparison result, whether the target cell allows the access of the first-type UE.

In an embodiment, the method further includes one of:
performing a cell reselection operation based on cell intra-frequency reselection identification information associated with the first-type UE; and
performing a cell reselection operation based on a preset rule;
where the cell reselection operation includes intra-frequency cell reselection or non-intra-frequency cell reselection.

In an embodiment, the cell intra-frequency reselection identification information is carried in one of:
a first-type system information block; and/or a second system information block.

In an embodiment, the preset rule is specified by a communication protocol, and/or pre-programmed.

In an embodiment, the first-type UE includes an enhanced reduced capability UE.

According to a third aspect of the present disclosure, there is provided an information transmission apparatus, arranged in a base station, including:
a transceiver module, configured to send initial BWP configuration information indicative of an initial BWP of a target cell, where the initial BWP is used for a first-type UE to compare the initial BWP with a maximum channel bandwidth supported by the first-type UE, and determine, at least based on a comparison result, whether the target cell allows access of the first-type UE, and the maximum channel bandwidth supported by the first-type UE is less than a maximum channel bandwidth supported by a second-type UE.

In an embodiment, when the maximum channel bandwidth supported by the first-type UE is less than the initial BWP, the target cell does not allow the access of the first-type UE.

In an embodiment, the initial BWP includes at least one of:
an initial BWP for the first-type UE; and
an initial BWP for the second-type UE.

In an embodiment, the transceiver module is specifically configured to perform at least one of:
sending a first-type system information block carrying the initial BWP configuration information, where the initial BWP configuration information is used for indicating the initial BWP for the first-type UE, and/or the initial BWP for the second-type UE; and
sending a second-type system information block carrying the initial BWP configuration information, where the initial BWP configuration information is used for indicating the initial BWP for the first-type UE.

In an embodiment, the first-type system information block includes cell intra-frequency reselection identification information indicative of a cell reselection operation associated with the first-type UE; and/or
the second-type system information block includes cell intra-frequency reselection identification information indicative of a cell reselection operation associated with the first-type UE;
where the cell reselection operation includes intra-frequency cell reselection or non-intra-frequency cell reselection.

In an embodiment, the initial BWP includes an uplink initial BWP, where the uplink initial BWP is used at least for the first-type UE to compare the uplink initial BWP with a maximum uplink channel bandwidth supported by the first-type UE, and determine, based on a comparison result, whether the target cell allows the access of the first-type UE; and/or
the initial BWP includes a downlink initial BWP, where the downlink initial BWP is used at least for the first-type UE to compare the downlink initial BWP with a maximum downlink channel bandwidth supported by the first-type UE, and determine, based on a comparison result, whether the target cell allows the access of the first-type UE.

In an embodiment, the first-type UE includes an enhanced reduced capability UE.

According to a fourth aspect of the present disclosure, there is provided an information transmission apparatus, arranged in a first-type UE, including:
a transceiver module, configured to receive initial BWP configuration information indicative of an initial BWP of a target cell, where the initial BWP is used for the first-type UE to compare the initial BWP with a maximum channel bandwidth supported by the first-type UE, and determine, at least based on a comparison result, whether the target cell allows access of the first-type UE, and the maximum channel bandwidth supported by the first-type UE is less than a maximum channel bandwidth supported by a second-type UE.

In an embodiment, the apparatus further includes a processing module configured to:
determine, in response to the maximum channel bandwidth supported by the first-type UE being less than the initial BWP, that the target cell does not allow the access of the first-type UE.

In an embodiment, the initial BWP includes at least one of:
an initial BWP for the first-type UE; and
an initial BWP for the second-type UE.

In an embodiment, the transceiver module is configured to perform at least one of:
receiving a first-type system information block carrying the initial BWP configuration information, where the initial BWP configuration information is used for indicating the initial BWP for the first-type UE, and/or the initial BWP for the second-type UE; and
receiving a second-type system information block carrying the initial BWP configuration information, where the initial BWP configuration information is used for indicating the initial BWP for the first-type UE.

In an embodiment, the initial BWP includes an uplink initial BWP, where the uplink initial BWP is used at least for the first-type UE to compare the uplink initial BWP with a maximum uplink channel bandwidth supported by the first-type UE, and determine, based on a comparison result, whether the target cell allows the access of the first-type UE; and/or
the initial BWP includes a downlink initial BWP, where the downlink initial BWP is used at least for the first-type UE to compare the downlink initial BWP with a maximum downlink channel bandwidth supported by the first-type UE, and determine, based on a comparison result, whether the target cell allows the access of the first-type UE.

In an embodiment, the transceiver module is further configured to perform at least one of:
performing a cell reselection operation based on cell intra-frequency reselection identification information associated with the first-type UE; and
performing a cell reselection operation based on a preset rule;
where the cell reselection operation includes intra-frequency cell reselection or non-intra-frequency cell reselection.

In an embodiment, the cell intra-frequency reselection identification information is carried in one of:
a first-type system information block; and/or a second system information block.

In an embodiment, the preset rule is specified by a communication protocol, and/or pre-programmed.

In an embodiment, the first-type UE includes an enhanced reduced capability UE.

According to a fifth aspect of the present disclosure, there is provided a communication device. The communication device includes:
a processor; and
a memory, configured to store an executable instruction of the processor; where
the processor, when running the executable instruction, is configured to implement the information transmission method according to the first aspect or the second aspect.

According to a sixth aspect of the present disclosure, there is provided a computer storage medium. The computer storage medium stores an executable program of a computer. The executable program, when executed by a processor, implements the information transmission method according to the first aspect or the second aspect.

The technical solutions provided in the embodiments of the present disclosure may include the following beneficial effects.

In the embodiments of the present disclosure, the base station sends the initial BWP configuration information indicative of the initial BWP of the target cell, where the initial BWP is used at least for the first-type UE to compare the initial BWP with the maximum channel bandwidth supported by the first-type UE, and determine, based on the comparison result, whether the target cell allows the access of the first-type UE. Here, the maximum channel bandwidth supported by the first-type UE is less than the maximum channel bandwidth supported by the second-type UE.

In this way, the base station indicates the initial BWP to the first-type UE, the first-type UE determines, based on the maximum channel bandwidth supported by the first-type UE and the initial BWP, whether the target cell allows the access. The target cell achieves the control of cell access for the first-type UE, which meets the communication requirement, and improves the communication reliability.

It should be understood that the above general description and the later detailed description are only exemplary and explanatory, and do not limit the embodiments of the present disclosure.

### BRIEF DESCRIPTION OF THE DRAWINGS

FIG. 1 is a schematic structural diagram of a wireless communication system.
FIG. 2 is a schematic diagram of a channel bandwidth supported by an eRedCap UE illustrated according to an exemplary embodiment.
FIG. 3 is a flowchart of an information transmission method illustrated according to an exemplary embodiment.
FIG. 4 is a flowchart of an information transmission method illustrated according to an exemplary embodiment.
FIG. 5 is a flowchart of an information transmission method illustrated according to an exemplary embodiment.
FIG. 6 is a flowchart of an information transmission method illustrated according to an exemplary embodiment.
FIG. 7 is a flowchart of an information transmission method illustrated according to an exemplary embodiment.
FIG. 8 is a block diagram of an information transmission apparatus illustrated according to an exemplary embodiment.
FIG. 9 is a block diagram of an information transmission apparatus illustrated according to an exemplary embodiment.
FIG. 10 is a block diagram of a UE illustrated according to an exemplary embodiment.
FIG. 11 is a block diagram of a base station illustrated according to an exemplary embodiment.

### DETAILED DESCRIPTION

The exemplary embodiments are described in detail here, examples of which are indicated in the accompanying drawings. When the following description involves the accompanying drawings, the same numerals in different accompanying drawings indicate the same or similar elements unless otherwise indicated. The embodiments described in the following exemplary embodiments do not represent all embodiments consistent with the embodiments of the present disclosure. On the contrary, they are only examples of devices and methods consistent with some aspects of the embodiments of the present disclosure as detailed in the appended claims.

The terms used in the embodiments of the present disclosure are used solely for the purpose of describing particular embodiments, but are not intended to limit the embodiments of the present disclosure. The singular forms of "a" and "the" used in the embodiments of the present disclosure and the appended claims are also intended to include the plural form, unless the context clearly indicates other meanings. It should also be understood that the term "and/or" as used in this article refers to and includes any or all possible combinations of one or more of the associated listed items.

It should be understood that although the terms first, second, third, etc. may be used in the embodiments of the present disclosure to describe various types of information, such information should not be limited to these terms. These terms are only used to distinguish the same type of information from one another. For example, without departing from the scope of the embodiments of the present disclosure, the first information may also be referred to as the second information, and similarly, the second information may also be referred to as the first information. Depending on the context, the phrase "if" as used herein may be interpreted as "at the time of......", "when ......", or "in response to determining".

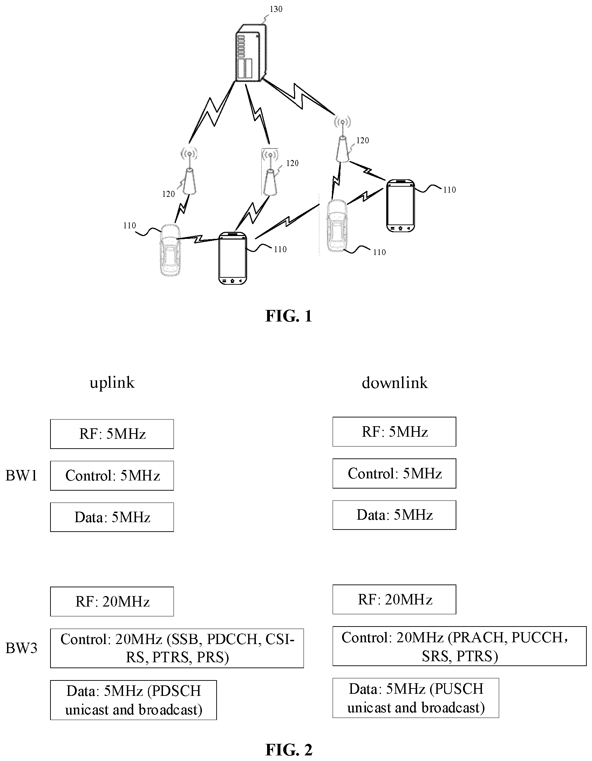

Referring to FIG. 1, a schematic structural diagram of a wireless communication system provided in an embodiment of the present disclosure is shown. As shown in FIG. 1, the wireless communication system is a communication system based on the cellular mobile communication technology, and the wireless communication system may include one or more UEs 110, and one or more base stations 120.

In some embodiments, the UE 110 may refer to a device that provides voice and/or data connectivity to a user. The UE 110 may communicate with one or more core networks via a radio access network (RAN). The UE 110 may be an IoT user device, such as a sensor device, a mobile phone (or referred to as a "cellular" phone), or a computer with an IoT user device. For example, the UE 110 may be a fixed, portable, pocket, handheld, computer built-in, or vehicle-mounted device. For example, the UE 110 may be a station (STA), a subscriber unit, a subscriber station, a mobile station, a mobile, a remote station, an access point, a remote user device (remote terminal), an access user device (access terminal), a user terminal, a user agent, a user device, or a user equipment. Or, the UE 110 may be a device of an unmanned aerial vehicle. Or, the UE 110 may be a vehicle-mounted device, such as a trip computer with wireless communication functions, or a wireless user device externally connected to a trip computer. Or, the UE 110 may be a road side device, such as a street light, a signal light, or other road side devices with wireless communication functions.

The base station 120 may be a network side device in the wireless communication system. In some embodiments, the wireless communication system may be the 4th generation mobile communication (4G) system, also referred to as the long term evolution (LTE) system. Or, the wireless communication system may be a 5G system, also referred to as a new radio (NR) system or a 5G NR system. Or, the wireless communication system may be a next generation system of the 5G system. In some embodiments, the access network in the 5G system may be referred to as a new generation-radio access network (NG-RAN).

In some embodiments, the base station 120 may be an evolved base station (eNB) used in a 4G system. Or, the base station 120 may be a base station (gNB) with a centralized distributed architecture in a 5G system. When adopting the centralized distributed architecture, the base station 120 typically includes a central unit (CU) and at least two distributed units (DUs). The central unit is provided with a protocol stack of a packet data convergence protocol (PDCP) layer, a radio link control (RLC) layer, and a medium access control (MAC) layer. The distributed unit is provided with a protocol stack of a physical (PHY) layer. The embodiments of the present disclosure do not limit the specific implementations of the base station 120.

A wireless connection may be established between the base station 120 and the UE 110 via a wireless air interface. In a different embodiment, the wireless air interface is a wireless air interface based on a 4G standard. Or, the wireless air interface is a wireless air interface based on a 5G standard, for example, the wireless air interface is a new air interface. Or, the wireless air interface may also be a wireless air interface based on a next generation mobile communication network technology standard of the 5G.

In some embodiments, an end to end (E2E) connection may also be established between UEs 110, for example, scenarios such as vehicle to vehicle (V2V) communications, vehicle to infrastructure (V2I) communications, and vehicle to pedestrian (V2P) communications in the vehicle to everything (V2X) communications.

Here, the above-described UE may be considered as the terminal device in the following embodiments.

In some embodiments, the above-described wireless communication system may further include a network management device 130.

One or more base stations 120 are connected to the network management device 130 respectively. In some embodiments, the network management device 130 may be a core network device in the wireless communication system, for example, the network management device 130 may be a mobility management entity (MME) in the evolved packet core (EPC). Alternatively, the network management device may also be other core network devices, such as a service gateway (SGW), a public data network gateway (PGW), a policy and charging rules function (PCRF), or a home subscriber server (HSS). The implementation forms of the network management device 130 are not limited in the embodiments of the present disclosure.

In order to facilitate the understanding of those skilled in the art, the embodiments of the present disclosure enumerate a plurality of embodiments to provide a clear description of the technical solutions of the embodiments of the present disclosure. Of course, those skilled in the art can understand that the plurality of embodiments provided by the embodiments of the present disclosure may be performed individually or in combination with the methods of other embodiments in the embodiments of the present disclosure, or may be performed individually or in combination with some methods of other related arts. The embodiments of the present disclosure do not limit this.

The 3GPP Release 18 (R18) standard introduces an enhanced RedCap UE, abbreviated as eRedCap UE. The performance of the eRedCap UE is further reduced on the basis of the RedCap UE. The channel bandwidth capability of the eRedCap UE is shown in FIG. 2.

After the introduction of the eRedcap UE, it is required to consider cell bar processing for the eRedcap UE. How to achieve the cell bar processing for the eRedcap UE is an urgent problem to be solved.

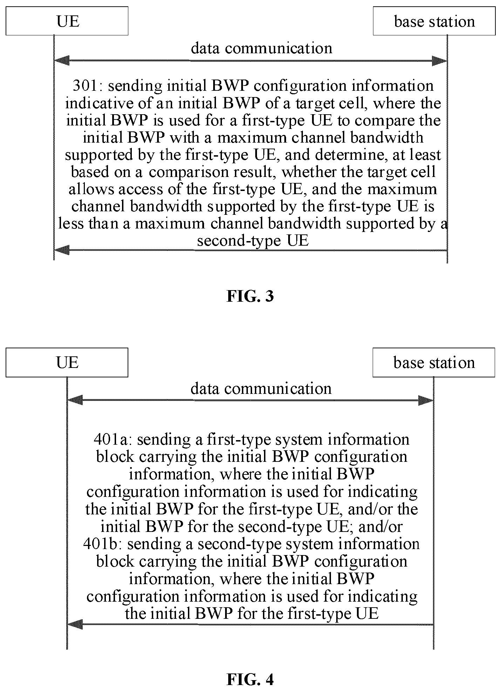

As shown in FIG. 3, the embodiments of the present disclosure provide an information transmission method, performed by a base station, including step 301.

At step 301, initial BWP configuration information indicative of an initial BWP of a target cell is sent, where the initial BWP is used at least for a first-type UE to compare the initial BWP with a maximum channel bandwidth supported by the first-type UE, and determine, based on a comparison result, whether the target cell allows access of the first-type UE, and the maximum channel bandwidth supported by the first-type UE is less than a maximum channel bandwidth supported by a second-type UE.

The first-type UE and the second-type UE may be divided based on the supported maximum channel bandwidth.

In a possible implementation, in a particular frequency band (e.g., FR1 frequency band), the maximum channel bandwidth supported by the first-type UE is less than or equal to 5 MHz, and the maximum channel bandwidth supported by the second-type UE is greater than 5 MHz.

The supported maximum channel bandwidth may include, but is not limited to, the bandwidth processing capability that the radio frequency (RF) transceiver and the baseband processing module have.

In an embodiment, the first-type UE includes an enhanced reduced capability user equipment (eRedCap UE).

The first-type UE may be an eRedCap UE. The second-type UE may be a capability simplified UE, such as a RedCap UE in the 3GPP Release 17 (R17), or a UE with unreduced capability, such as an enhanced mobile broadband UE (eMMB UE). For example, the maximum channel bandwidth supported by the eRedCap UE is less than or equal to 5 MHz.

In a possible implementation, a maximum uplink channel bandwidth supported by the eRedCap UE is less than or equal to 5 MHz, and/or, a maximum downlink channel bandwidth supported by the eRedCap UE is less than or equal to 5 MHz.

The base station of the target cell may send the initial BWP configuration information to the first-type UE. The first-type UE may determine the initial BWP based on the initial BWP configuration information, and thus determine, based on the maximum channel bandwidth supported by the first-type UE itself, whether the first-type UE is capable of accessing the target cell.

The first-type UE may compare the maximum channel bandwidth supported by the first-type UE itself with the initial BWP, then determine, based on the comparison result, whether the first-type UE is capable of supporting the initial BWP, and thus determine whether the first-type UE is capable of accessing the target cell.

In a possible implementation, the base station uses the initial BWP to control the access of different types of UEs. Here, the different types of UEs include, but are not limited to, the first-type UE and the second-type UE. For example, if the initial BWP indicated by the base station is greater than the maximum channel bandwidth supported by the UE, the UE cannot access. Alternatively, if the initial BWP indicated by the base station is less than or equal to the maximum channel bandwidth supported by the UE, the UE can access.

In a possible implementation, the base station may send the initial BWP configuration information to the first-type UE, e.g., through broadcasting.

Here, the initial BWP indicated by the initial BWP configuration information may be only for the first-type UE, i.e., the initial BWP indicated by the initial BWP configuration information may be only for the first-type UE to determine whether the first-type UE can access. The initial BWP indicated by the initial BWP configuration information may also be applicable to different types of UEs, e.g., the initial BWP indicated by the initial BWP configuration information may be for the first-type UE and the second-type UE to determine whether they can access.

In a possible implementation, the initial BWP configuration information may indicate a plurality of initial BWPs; at least one of the plurality of initial BWPs is for the first-type UE, and/or, at least one of the plurality of initial BWPs may be used for both the first-type UE and the second-type UE, and/or, at least one of the plurality of initial BWPs may be used for the second-type UE.

In this way, the base station indicates the initial BWP to the first-type UE, the first-type UE determines, based on the maximum channel bandwidth supported by the first-type UE and the initial BWP, whether the target cell allows the access. The target cell achieves the control of cell access for the first-type UE, which meets the communication requirement, and improves the communication reliability.

In an embodiment, when the maximum channel bandwidth supported by the first-type UE is less than the initial BWP, the target cell does not allow the access of the first-type UE.

In a possible implementation, at least when the maximum channel bandwidth supported by the first-type UE is greater than or equal to the initial BWP, it is determined that the target cell allows the access of the first-type UE.

When the maximum channel bandwidth supported by the first-type UE is greater than or equal to the initial BWP, the bandwidth capability of the first-type UE is capable of meeting the requirement of the initial BWP. The condition for the base station to allow the access of the first-type UE includes, but is not limited to, the maximum channel bandwidth supported by the first-type UE being greater than or equal to the initial BWP.

The comparison result of the maximum channel bandwidth supported by the first-type UE with the initial BWP may be used for the first-type UE to determine whether its capability supports the bandwidth (including the uplink bandwidth and/or the downlink bandwidth) configured by the network. In a possible implementation, at least when the maximum channel bandwidth supported by the first-type UE is greater than or equal to the initial BWP, and the maximum channel bandwidth supported by the first-type UE is less than or equal to the carrier bandwidth, the target cell allows the access of the first-type UE.

Here, when the maximum channel bandwidth supported by the first-type UE is less than the initial BWP, the bandwidth capability of the first-type UE is not capable of meeting the requirement of the initial BWP, i.e., the base station does not allow the access of the first-type UE. The base station does not allow the access of the first-type UE, i.e., the target cell is in a cell bar state for the first-type UE.

In an embodiment, the initial BWP includes an uplink initial BWP, where the uplink initial BWP is used at least for the first-type UE to compare the uplink initial BWP with a maximum uplink channel bandwidth supported by the first-type UE, and determine, based on a comparison result, whether the target cell allows the access of the first-type UE; and/or

the initial BWP includes a downlink initial BWP, where the downlink initial BWP is used at least for the first-type UE to compare the downlink initial BWP with a maximum downlink channel bandwidth supported by the first-type UE, and determine, based on a comparison result, whether the target cell allows the access of the first-type UE.

The base station may indicate the uplink initial BWP and the downlink initial BWP respectively. The maximum uplink channel bandwidth and the maximum downlink channel bandwidth of the first-type UE may be the same or different.

At least when the maximum uplink channel bandwidth supported by the first-type UE is greater than or equal to the uplink initial BWP, the uplink bandwidth capability of the first-type UE is capable of meeting the requirement of the uplink initial BWP, i.e., from an uplink perspective, the target cell allows the access of the first-type UE.

At least when the maximum downlink channel bandwidth supported by the first-type UE is greater than or equal to the downlink initial BWP, the downlink bandwidth capability of the first-type UE is capable of meeting the requirement of the downlink initial BWP, i.e., from a downlink perspective, the target cell allows the access of the first-type UE.

The maximum uplink channel bandwidth supported by the first-type UE being greater than or equal to the uplink initial BWP, and/or, the maximum downlink channel bandwidth supported by the first-type UE being greater than or equal to the downlink initial BWP is a necessary condition for the target cell to allow the access of the first-type UE. The first-type UE still needs to meet other conditions, such as the maximum uplink channel bandwidth supported by the first-type UE being less than or equal to the carrier bandwidth, and the maximum downlink channel bandwidth supported by the first-type UE being less than or equal to the carrier bandwidth, in order for the target cell to allow the access of the first-type UE. In this embodiment, if not stated, the maximum channel bandwidth supported by the first-type UE being greater than or equal to the initial BWP is only a necessary condition for the target cell to allow the access of the first-type UE. To determine whether the target cell allows the access of the first-type UE, it is also required to determine whether the maximum channel bandwidth supported by the first-type UE is less than or equal to the carrier bandwidth, etc.

In a possible implementation, the condition for the target cell to allow the access of the first-type UE includes at least one of the following:
the maximum downlink channel bandwidth supported by the first-type UE being greater than or equal to the downlink initial BWP;
the maximum downlink channel bandwidth supported by the first-type UE being less than or equal to the carrier bandwidth; where the carrier bandwidth may be indicated by the uplinkConfigCommon field of the downlink initial BWP carrier;
the maximum uplink channel bandwidth supported by the first-type UE being greater than or equal to the uplink initial BWP;
the maximum uplink channel bandwidth supported by the first-type UE being less than or equal to the carrier bandwidth; where the carrier bandwidth may be indicated by the uplinkConfigCommon field of the uplink initial BWP carrier.

In a possible implementation, the condition that the target cell does not allow the access of the first-type UE, i.e., the target cell is in a cell bar state for the first-type UE, includes at least one of the following:
the maximum downlink channel bandwidth supported by the first-type UE being less than the initial downlink BWP;
the maximum uplink channel bandwidth supported by the first-type UE being less than the uplink initial BWP.

In an embodiment, the initial BWP includes at least one of the following:
an initial BWP for the first-type UE;
an initial BWP for the second-type UE.

Here, the initial BWP may be an initial BWP for the first-type UE, i.e., the initial BWP is only used for the first-type UE to determine whether the target cell allows the access.

In a possible implementation, the initial BWP for the first-type UE may include at least one of the following: an uplink initial BWP for the first-type UE; a downlink initial BWP for the first-type UE.

The initial BWP for the second-type UE may be an initial BWP configured by the network side for the second-type UE. The initial BWP for the second-type UE may also be used for the first-type UE to determine whether the target cell allows the access of the first-type UE.

In a possible implementation, in response to the base station not indicating to the first-type UE the initial BWP for the first-type UE, the first-type UE determines, based on the initial BWP for the second-type UE, whether the target cell allows the access of the first-type UE.

For example, the initial BWP configuration information does not configure the initial BWP (the uplink initial BWP and/or the downlink initial BWP) for the first-type UE (e.g., the eRedcap UE), and only configures the initial BWP (the uplink initial BWP and/or the downlink initial BWP) for the second-type UE (e.g., the eMMB UE and/or the Redcap UE of the R17 standard), if the maximum channel bandwidth supported by the first-type UE is less than the initial BWP configured for the second-type UE, then for the first-type UE, the target cell is in a cellbar state.

As shown in FIG. 4, step 301 includes at least one of the following steps 401a and 401b.

At step 401a, a first-type system information block carrying the initial BWP configuration information is sent, where the initial BWP configuration information is used for indicating the initial BWP for the first-type UE, and/or the initial BWP for the second-type UE.

At step 401b, a second-type system information block carrying the initial BWP configuration information is sent, where the initial BWP configuration information is used for indicating the initial BWP for the first-type UE.

Step 401a and/or step 401b may be implemented individually or in combination with step 301.

Here, the first-type system information block (SIB) and the second-type system information block (SIB) may be different SIB1.

The initial BWP configuration information carried by the first-type system information block may indicate an initial BWP only for the first-type UE, or may indicate an initial BWP for the second-type UE.

The second-type system information block may only carry the initial BWP configuration information indicative of an initial BWP for the first-type UE.

For example, the initial BWP configuration information carried by the first-type system information block indicates the initial BWP for the first-type UE, and if the maximum channel bandwidth supported by the first-type UE is greater than or equal to the initial BWP for the first-type UE, the determination of whether the first-type UE can access may be proceeded (e.g., determining whether the maximum channel bandwidth supported by the first-type UE is less than or equal to the carrier bandwidth, etc.). Otherwise, it is determined that for the first-type UE, the target cell is in a cellbar state. If the initial BWP configuration information carried by the first-type system information block indicates the initial BWP for the second-type UE and does not indicate the initial BWP for the first-type UE, and if the maximum channel bandwidth supported by the first-type UE is greater than or equal to the initial BWP configured for the second-type UE, then the determination of whether the first-type UE can access may be proceeded (e.g., determining whether the maximum channel bandwidth supported by the first-type UE is less than or equal to the carrier bandwidth, etc.). Otherwise, it is determined that for the first-type UE, the target cell is in a cellbar state.

For example, the initial BWP configuration information carried by the second-type system information block indicates the initial BWP for the first-type UE, and if the maximum channel bandwidth supported by the first-type UE is greater than or equal to the initial BWP for the first-type UE, the determination of whether the first-type UE can access may be proceeded (e.g., determining whether the maximum channel bandwidth supported by the first-type UE is less than or equal to the carrier bandwidth, etc.). Otherwise, it is determined that for the first-type UE, the target cell is in a cell bar state.

In a possible implementation, the first-type system information block may carry initial BWP configuration information indicative of a plurality of initial BWPs for the first-type UE, and/or indicative of a plurality of initial BWPs for the second UE.

In a possible implementation, the second-type system information block may carry initial BWP configuration information indicative of a plurality of initial BWPs for the first-type UE.

In a possible implementation, in response to the second-type system information block carrying initial BWP configuration information indicative of N initial BWPs (including the uplink initial BWP and/or the downlink initial BWP) for the first-type UE, where N is a positive integer greater than or equal to 1, at least when the maximum channel bandwidth supported by the first-type UE is greater than or equal to any one of the N initial BWPs, or greater than or equal to each of the N initial BWPs, then the determination of whether the first-type UE can access the target cell may be proceeded (e.g., determining whether the maximum channel bandwidth supported by the first-type UE is less than or equal to the carrier bandwidth, etc.).

Alternatively, when the maximum channel bandwidth supported by the first-type UE is less than any one of the N initial BWPs, the target cell does not allow the access of the first-type UE.

That is, in response to the second-type system information block carrying the initial BWP configuration information indicative of N initial BWPs for the first-type UE, and when the maximum channel bandwidth supported by the first-type UE is greater than or equal to the N initial BWPs, the determination of whether the first-type UE can access may be proceeded.

In response to the second-type system information block carrying initial BWP configuration information indicative of N initial BWPs for the first-type UE, and when the maximum channel bandwidth supported by the first-type UE is less than any one of the N initial BWPs, the first-type UE determines that the target cell does not allow the access of the first-type UE.

The comparison of the maximum channel bandwidth supported by the first-type UE with the N initial BWPs may include: a comparison of a maximum uplink channel bandwidth supported by the first-type UE with N uplink initial BWPs, and/or a comparison of a maximum downlink channel bandwidth supported by the first-type UE with N downlink initial BWPs.

In a possible implementation, in response to the second-type system information block carrying initial BWP configuration information indicative of N initial BWPs (including the uplink initial BWP and/or the downlink initial BWP) for the first-type UE, where N is a positive integer greater than or equal to 1, at least when the maximum channel bandwidth supported by the first-type UE is greater than or equal to at least one of the N initial BWPs, then the determination of whether the first-type UE can access the target cell may be proceeded (e.g., determining whether the maximum channel bandwidth supported by the first-type UE is less than or equal to the carrier bandwidth, etc.).

Alternatively, when the maximum channel bandwidth supported by the first-type UE is less than all of the N initial BWPs, the target cell does not allow the access of the first-type UE.

In a possible implementation, the second-type system information block at least carries initial BWP configuration information indicative of one initial BWP for the first-type UE. That is, the second-type system information block at least carrying the initial BWP configuration information indicative of one initial BWP for the first-type UE is a mandatory configuration of the second-type system information block. Here, the initial BWP includes the uplink initial BWP and/or the downlink initial BWP.

In an embodiment, the first-type system information block includes cell intra-frequency reselection identification information indicative of a cell reselection operation associated with the first-type UE; and/or
the second-type system information block includes cell intra-frequency reselection identification information indicative of a cell reselection operation associated with the first-type UE;
where the cell reselection operation includes whether intra-frequency cell reselection is allowed.

If the first UE determines that the target cell does not allow the access, i.e., the target cell is in a cellbar state, then the first-type UE may perform cell reselection. The cell reselection operation may include whether intra-frequency cell reselection is allowed.

In a possible implementation, the first-type UE may determine the cell reselection operation based on the cell intra-frequency reselection switch, i.e., intraFreqReselection, in the MIB.

The first-type UE may also perform the cell reselection operation based on the cell intra-frequency reselection identification information.

The cell intra-frequency reselection identification information may be carried in the first-type system information block or the second-type system information block.

In a possible implementation, in response to the first-type UE determining, based on the initial BWP configuration information in the first-type system information block, that the target cell does not allow the access, the first-type UE determines the cell reselection operation based on the cell intra-frequency reselection identification information carried in the first-type system information block.

In a possible implementation, in response to the first-type UE determining, based on the initial BWP configuration information in the second-type system information block, that the target cell does not allow the access, the first-type UE determines the cell reselection operation based on the cell intra-frequency reselection identification information carried in the second-type system information block.

In a possible implementation, the cell intra-frequency reselection identification information may include an intra-frequency cell reselection indication (IFRI) in the SIB1.

In a possible implementation, the IFRI for the first-type UE may be set in the SIB 1.

The cell reselection operation may also be configured based on a preset rule. The preset rule may be determined through negotiation between the first-type UE and the network side.

In an embodiment, the preset rule is specified by a communication protocol, and/or pre-programmed.

The preset rule may be specified by the communication protocol.

The pre-configured preset rule may be pre-defined by using hardcode.

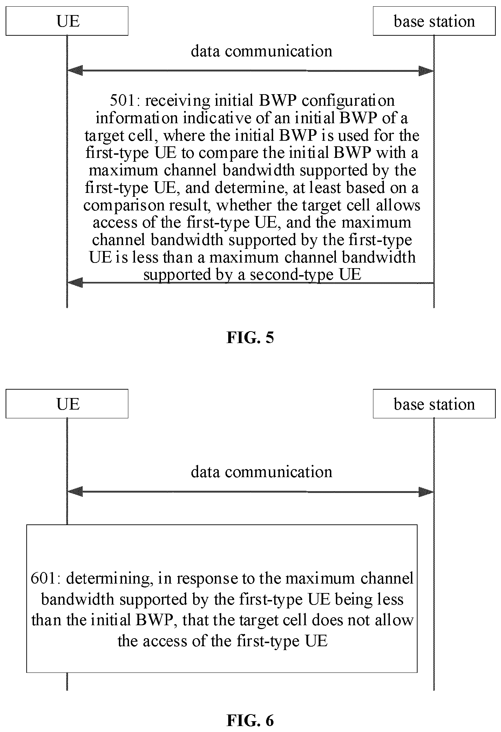

As shown in FIG. 5, the embodiments of the present disclosure provide an information transmission method, performed by a UE, including step 501.

At step 501, initial BWP configuration information indicative of an initial BWP of a target cell is received, where the initial BWP is used for a first-type UE to compare the initial BWP with a maximum channel bandwidth supported by the first-type UE, and determine, at least based on a comparison result, whether the target cell allows access of the first-type UE, and the maximum channel bandwidth supported by the first-type UE is less than a maximum channel bandwidth supported by a second-type UE.

The first-type UE and the second-type UE may be divided based on the supported maximum channel bandwidth.

In a possible implementation, in a particular frequency band (e.g., FR1 frequency band), the maximum channel bandwidth supported by the first-type UE is less than or equal to 5 MHz, and the maximum channel bandwidth supported by the second-type UE is greater than 5 MHz.

The supported maximum channel bandwidth may include, but is not limited to, the bandwidth processing capability that the RF transceiver and the baseband processing module have.

In an embodiment, the first-type UE includes an eRedCap UE.

The first-type UE may be an eRedCap UE. The second-type capability simplified UE may be a RedCap UE in the 3GPP Release 17 (R17), or a UE with unreduced capability, such as an eMMB UE.

For example, the maximum channel bandwidth supported by the eRedCap UE is less than or equal to 5 MHz.

In a possible implementation, a maximum uplink channel bandwidth supported by the eRedCap UE is less than or equal to 5 MHz, and/or, a maximum downlink channel bandwidth supported by the eRedCap UE is less than or equal to 5 MHz.

The base station of the target cell may send the initial BWP configuration information to the first-type UE. The first-type UE may determine the initial BWP based on the initial BWP configuration information, and thus determine, based on the maximum channel bandwidth supported by the first-type UE itself, whether the first-type UE is capable of accessing the target cell.

The first-type UE may compare the maximum channel bandwidth supported by the first-type UE itself with the initial BWP, then determine, based on the comparison result, whether the first-type UE is capable of supporting the initial BWP, and thus determine whether the first-type UE is capable of accessing the target cell.

In a possible implementation, the base station uses the initial BWP to control the access of different types of UEs. Here, the different types of UEs include, but are not limited to, the first-type UE and the second-type UE. For example, if the initial BWP indicated by the base station is greater than the maximum channel bandwidth supported by the UE, the UE cannot access. Alternatively, if the initial BWP indicated by the base station is less than or equal to the maximum channel bandwidth supported by the UE, the UE can access.

In a possible implementation, the base station may send the initial BWP configuration information to the first-type UE, e.g., through broadcasting.

Here, the initial BWP indicated by the initial BWP configuration information may be only for the first-type UE, i.e., the initial BWP indicated by the initial BWP configuration information may be only for the first-type UE to determine whether the first-type UE can access. The initial BWP indicated by the initial BWP configuration information may also be applicable to different types of UEs, e.g., the initial BWP indicated by the initial BWP configuration information may be for the first-type UE and the second-type UE to determine whether they can access.

In a possible implementation, the initial BWP configuration information may indicate a plurality of initial BWPs; at least one of the plurality of initial BWPs is for the first-type UE, and/or, at least one of the plurality of initial BWPs may be used for both the first-type UE and the second-type UE, and/or, at least one of the plurality of initial BWPs may be used for the second-type UE.

In this way, the base station indicates the initial BWP to the first-type UE, the first-type UE determines, based on the maximum channel bandwidth supported by the first-type UE and the initial BWP, whether the target cell allows the access. The target cell achieves the control of cell access for the first-type UE, which meets the communication requirement, and improves the communication reliability.

As shown in FIG. 6, the embodiments of the present disclosure provide an information transmission method, performed by a UE, including step 601.

At step 601, in response to the maximum channel bandwidth supported by the first-type UE being less than the initial BWP, it is determined that the target cell does not allow the access of the first-type UE.

Step 601 may be implemented individually or in combination with step 501.

When the maximum channel bandwidth supported by the first-type UE is greater than or equal to the initial BWP, the bandwidth capability of the first-type UE is capable of meeting the requirement of the initial BWP. The condition for the base station to allow the access of the first-type UE includes, but is not limited to, the maximum channel bandwidth supported by the first-type UE being greater than or equal to the initial BWP.

The comparison result of the maximum channel bandwidth supported by the first-type UE with the initial BWP may be used for the first-type UE to determine whether its capability is capable of supporting the bandwidth (including the uplink bandwidth and/or the downlink bandwidth) configured by the network.

In a possible implementation, at least when the maximum channel bandwidth supported by the first-type UE is greater than or equal to the initial BWP, it is determined that the target cell allows the access of the first-type UE.

In a possible implementation, at least when the maximum channel bandwidth supported by the first-type UE is greater than or equal to the initial BWP, and the maximum channel bandwidth supported by the first-type UE is less than or equal to the carrier bandwidth, the target cell allows the access of the first-type UE.

Here, when the maximum channel bandwidth supported by the first-type UE is less than the initial BWP, the bandwidth capability of the first-type UE is not capable of meeting the requirement of the initial BWP, i.e., the base station does not allow the access of the first-type UE. The base station does not allow the access of the first-type UE, i.e., the target cell is in a cellbar state for the first-type UE.

In an embodiment, the initial BWP includes an uplink initial BWP, where the uplink initial BWP is used at least for the first-type UE to compare the uplink initial BWP with a maximum uplink channel bandwidth supported by the first-type UE, and determine, based on a comparison result, whether the target cell allows the access of the first-type UE; and/or
the initial BWP includes a downlink initial BWP, where the downlink initial BWP is used at least for the first-type UE to compare the downlink initial BWP with a maximum downlink channel bandwidth supported by the first-type UE, and determine, based on a comparison result, whether the target cell allows the access of the first-type UE.

The base station may indicate the uplink initial BWP and the downlink initial BWP respectively. The maximum uplink channel bandwidth and the maximum downlink channel bandwidth of the first-type UE may be the same or different.

At least when the maximum uplink channel bandwidth supported by the first-type UE is greater than or equal to the uplink initial BWP, the uplink bandwidth capability of the first-type UE is capable of meeting the requirement of the uplink initial BWP, i.e., from an uplink perspective, the target cell allows the access of the first-type UE.

At least when the maximum downlink channel bandwidth supported by the first-type UE is greater than or equal to the downlink initial BWP, the downlink bandwidth capability of the first-type UE is capable of meeting the requirement of the downlink initial BWP, i.e., from a downlink perspective, the target cell allows the access of the first-type UE.

The maximum uplink channel bandwidth supported by the first-type UE being greater than or equal to the uplink initial BWP, and/or, the maximum downlink channel bandwidth supported by the first-type UE being greater than or equal to the downlink initial BWP is a necessary condition for the target cell to allow the access of the first-type UE. The first-type UE still needs to meet other conditions, such as the maximum uplink channel bandwidth supported by the first-type UE being less than or equal to the carrier bandwidth, and the maximum downlink channel bandwidth supported by the first-type UE being less than or equal to the carrier bandwidth, in order for the target cell to allow the access of the first-type UE. In this embodiment, if not stated, the maximum channel bandwidth supported by the first-type UE being greater than or equal to the initial BWP is only a necessary condition for the target cell to allow the access of the first-type UE. To determine whether the target cell allows the access of the first-type UE, it is also required to determine whether the maximum channel bandwidth supported by the first-type UE is less than or equal to the carrier bandwidth, etc.

In a possible implementation, the condition for the target cell to allow the access of the first-type UE includes at least one of the following:
the maximum downlink channel bandwidth supported by the first-type UE being greater than or equal to the downlink initial BWP;
the maximum downlink channel bandwidth supported by the first-type UE being less than or equal to the carrier bandwidth; where the carrier bandwidth may be indicated by the uplinkConfigCommon field of the downlink initial BWP carrier;
the maximum uplink channel bandwidth supported by the first-type UE being greater than or equal to the uplink initial BWP;
the maximum uplink channel bandwidth supported by the first-type UE being less than or equal to the carrier bandwidth; where the carrier bandwidth may be indicated by the uplinkConfigCommon field of the uplink initial BWP carrier.

In a possible implementation, the condition that the target cell does not allow the access of the first-type UE, i.e., the target cell is in a cell bar state for the first-type UE, includes at least one of the following:
the maximum downlink channel bandwidth supported by the first-type UE being less than the initial downlink BWP;
the maximum uplink channel bandwidth supported by the first-type UE being less than the uplink initial BWP.

In an embodiment, the initial BWP includes at least one of the following:
an initial BWP for the first-type UE;
an initial BWP for the second-type UE.

Here, the initial BWP may be an initial BWP for the first-type UE, i.e., the initial BWP is only used for the first-type UE to determine whether the target cell allows the access of the first-type UE.

In a possible implementation, the initial BWP for the first-type UE may include at least one of the following: an uplink initial BWP for the first-type UE; a downlink initial BWP for the first-type UE.

The initial BWP for the second-type UE may be an initial BWP configured by the network side for the second-type UE. The initial BWP for the second-type UE may also be used for the first-type UE to determine whether the target cell allows the access of the first-type UE.

In a possible implementation, in response to the base station not indicating to the first-type UE the initial BWP for the first-type UE, the first-type UE determines, based on the initial BWP for the second-type UE, whether the target cell allows the access of the first-type UE.

For example, the initial BWP configuration information does not configure the initial BWP (the uplink initial BWP and/or the downlink initial BWP) for the first-type UE (e.g., the eRedcap UE), and only configures the initial BWP (the uplink initial BWP and/or the downlink initial BWP) for the second-type UE (e.g., the eMMB UE and/or the Redcap UE of the R17 standard), if the maximum channel bandwidth supported by the first-type UE is less than the initial BWP configured for the second-type UE, then for the first-type UE, the target cell is in a cellbar state.

In an embodiment, receiving the initial BWP configuration information indicative of the initial BWP of the target cell includes at least one of the following:
receiving a first-type system information block carrying the initial BWP configuration information, where the initial BWP configuration information is used for indicating the initial BWP for the first-type UE, and/or the initial BWP for the second-type UE;
receiving a second-type system information block carrying the initial BWP configuration information, where the initial BWP configuration information is used for indicating the initial BWP for the first-type UE.

Here, the first-type system information block (SIB) and the second-type system information block (SIB) may be different SIB1.

The initial BWP configuration information carried by the first-type system information block may indicate an initial BWP only for the first-type UE, or may indicate an initial BWP for the second-type UE.

The second-type system information block may only carry the initial BWP configuration information indicative of an initial BWP for the first-type UE.

For example, the initial BWP configuration information carried by the first-type system information block indicates the initial BWP for the first-type UE, and if the maximum channel bandwidth supported by the first-type UE is greater than or equal to the initial BWP for the first-type UE, the determination of whether the first-type UE can access may be proceeded (e.g., determining whether the maximum channel bandwidth supported by the first-type UE is less than or equal to the carrier bandwidth, etc.). Otherwise, it is determined that for the first-type UE, the target cell is in a cell bar state. If the initial BWP configuration information carried by the first-type system information block indicates the initial BWP for the second-type UE and does not indicate the initial BWP for the first-type UE, and if the maximum channel bandwidth supported by the first-type UE is greater than or equal to the initial BWP configured for the second-type UE, then the determination of whether the first-type UE can access may be proceeded (e.g., determining whether the maximum channel bandwidth supported by the first-type UE is less than or equal to the carrier bandwidth, etc.). Otherwise, it is determined that for the first-type UE, the target cell is in a cellbar state.

For example, the initial BWP configuration information carried by the second-type system information block indicates the initial BWP for the first-type UE, and if the maximum channel bandwidth supported by the first-type UE is greater than or equal to the initial BWP for the first-type UE, the determination of whether the first-type UE can access may be proceeded (e.g., determining whether the maximum channel bandwidth supported by the first-type UE is less than or equal to the carrier bandwidth, etc.). Otherwise, it is determined that for the first-type UE, the target cell is in a cellbar state.

In a possible implementation, the first-type system information block may carry initial BWP configuration information indicative of a plurality of initial BWPs for the first-type UE, and/or indicative of a plurality of initial BWPs for the second UE.

In a possible implementation, the second-type system information block may carry initial BWP configuration information indicative of a plurality of initial BWPs for the first-type UE.

In a possible implementation, in response to the second-type system information block carrying initial BWP configuration information indicative of N initial BWPs (including the uplink initial BWP and/or the downlink initial BWP) for the first-type UE, where N is a positive integer greater than or equal to 1, at least when the maximum channel bandwidth supported by the first-type UE is greater than or equal to any one of the N initial BWPs, or greater than or equal to each of the N initial BWPs, then the determination of whether the first-type UE can access the target cell may be proceeded (e.g., determining whether the maximum channel bandwidth supported by the first-type UE is less than or equal to the carrier bandwidth, etc.).

Alternatively, when the maximum channel bandwidth supported by the first-type UE is less than any one of the N initial BWPs, the target cell does not allow the access of the first-type UE.

That is, in response to the second-type system information block carrying the initial BWP configuration information indicative of N initial BWPs for the first-type UE, and when the maximum channel bandwidth supported by the first-type UE is greater than or equal to the N initial BWPs, the determination of whether the first-type UE can access may be proceeded.

In response to the second-type system information block carrying initial BWP configuration information indicative of N initial BWPs for the first-type UE, and when the maximum channel bandwidth supported by the first-type UE is less than any one of the N initial BWPs, the first-type UE determines that the target cell does not allow the access of the first-type UE.

The comparison of the maximum channel bandwidth supported by the first-type UE with the N initial BWPs may include: a comparison of a maximum uplink channel bandwidth supported by the first-type UE with N uplink initial BWPs, and/or a comparison of a maximum downlink channel bandwidth supported by the first-type UE with N downlink initial BWPs.

In a possible implementation, in response to the second-type system information block carrying initial BWP configuration information indicative of N initial BWPs (including the uplink initial BWP and/or the downlink initial BWP) for the first-type UE, where N is a positive integer greater than or equal to 1, at least when the maximum channel bandwidth supported by the first-type UE is greater than or equal to at least one of the N initial BWPs, then the determination of whether the first-type UE can access the target cell may be proceeded (e.g., determining whether the maximum channel bandwidth supported by the first-type UE is less than or equal to the carrier bandwidth, etc.).

Alternatively, when the maximum channel bandwidth supported by the first-type UE is less than all of the N initial BWPs, the target cell does not allow the access of the first-type UE. In a possible implementation, the second-type system information block at least carries initial BWP configuration information indicative of one initial BWP for the first-type UE. That is, the second-type system information block at least carrying the initial BWP configuration information indicative of one initial BWP for the first-type UE is a mandatory configuration of the second-type system information block. Here, the initial BWP includes the uplink initial BWP and/or the downlink initial BWP.

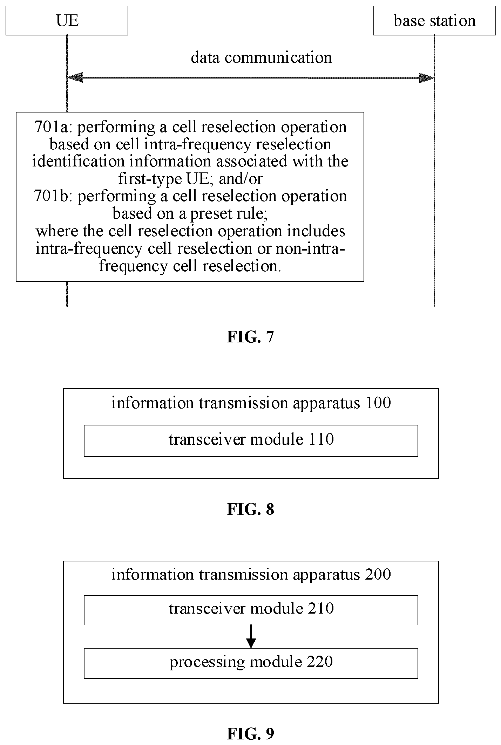

As shown in FIG. 7, the embodiments of the present disclosure provide an information transmission method, performed by a UE, including at least one of the following steps 701a and 701b.

At step 701a, a cell reselection operation is performed based on cell intra-frequency reselection identification information associated with the first-type UE.

At step 701b, a cell reselection operation is performed based on a preset rule; where the cell reselection operation includes intra-frequency cell reselection or non-intra-frequency cell reselection.

Step 701a and/or step 701b may be performed individually or in combination with step 501 and/or step 601.

If the first UE determines that the target cell does not allow the access, i.e., the target cell is in a cellbar state, then the first-type UE may perform cell reselection. The cell reselection operation may include whether intra-frequency cell reselection is allowed.

In a possible implementation, the first-type UE may determine the cell reselection operation based on the cell intra-frequency reselection switch, i.e., intraFreqReselection, in the MIB.

The first-type UE may also perform the cell reselection operation based on the cell intra-frequency reselection identification information.

In an embodiment, the cell intra-frequency reselection identification information is carried in one of the following:
a first-type system information block; and/or a second system information block.

In a possible implementation, in response to the first-type UE determining, based on the initial BWP configuration information in the first-type system information block, that the target cell does not allow the access, the first-type UE determines the cell reselection operation based on the cell intra-frequency reselection identification information carried in the first-type system information block.

In a possible implementation, in response to the first-type UE determining, based on the initial BWP configuration information in the second-type system information block, that the target cell does not allow the access, the first-type UE determines the cell reselection operation based on the cell intra-frequency reselection identification information carried in the second-type system information block.

In a possible implementation, the cell intra-frequency reselection identification information may include an intra-frequency cell reselection indication (IFRI) in the SIB1.

In a possible implementation, the IFRI for the first-type UE may be set in the SIB1.

The cell reselection operation may also be configured based on a preset rule. The preset rule may be determined through negotiation between the first-type UE and the network side.

In an embodiment, the preset rule is specified by a communication protocol, and/or pre-programmed.

The preset rule may be specified by the communication protocol.

The pre-configured preset rule may be pre-defined by using hardcode.

To further explain any embodiment of the present disclosure, a specific embodiment is provided below.
1. A specific-type terminal determines, according to uplink and downlink initial BWP configuration provided in a system message, whether access is allowed.
   a) The specific-type terminal is a type pf enhanced Redcap terminal (the first-type UE) introduced in the R18 or a candidate release.
2. The specific-type user determines its uplink initial BWP, and determines whether the maximum uplink channel bandwidth supported by the specific-type user is greater than or equal to the uplink initial BWP, and if it is not met, it is the cellbar.

In scheme 1, for the eRedcap UE, the uplink initial BWP is configured by the SIB1 (the first-type system information block).

If an uplink initial BWP is configured for the eRedcap UE in the SIB1, the specific-type terminal (e.g., the eRedcap UE) determines that the maximum uplink channel bandwidth supported by the specific-type terminal is greater than or equal to the uplink initial BWP configured for the specific-type user (e.g., the eRedcap UE), and if it is not met, it is the cellbar.

If no uplink initial BWP is configured for the eRedcap UE in the SIB1, the specific-type terminal (e.g., the eRedcap UE) determines that the maximum uplink channel bandwidth supported by the specific-type terminal is greater than or equal to the uplink initial BWP configured for the second-type user (e.g., the uplink initial BWP configured for the eMBB or the uplink initial BWP configured for the Redcap UE of the R17 standard), and if it is not met, it is the cellbar.

In scheme 2, for the eRedcap UE, the uplink initial BWP is configured by the SIB1-bis (the second-type system information block).

If an uplink initial BWP is configured for the eRedcap UE in the SIB1-bis, the specific-type terminal (e.g., the eRedcap UE) determines that the maximum uplink channel bandwidth supported by the specific-type terminal is greater than or equal to the uplink initial BWP configured for the specific-type user (e.g., the eRedcap UE), and if it is not met, it is the cellbar (the SIB1-bis may include a plurality of uplink initial BWPs).

Further, one uplink initial BWP configured for the eRedcap UE in the SIB1-bis is a mandatory configuration.

3. The specific-type user determines its downlink initial BWP, and determines whether the maximum downlink channel bandwidth supported by the specific-type user is greater than or equal to the downlink initial BWP, and if it is not met, it is the cellbar.

In scheme 1, for the eRedcap UE, the downlink initial BWP is configured by the SIB1 (the first-type system information block).

If a downlink initial BWP is configured for the eRedcap UE in the SIB1, the specific-type terminal (e.g., the eRedcap UE) determines that the maximum downlink channel bandwidth supported by the specific-type terminal is greater than or equal to the downlink initial BWP configured for the specific-type user (e.g., the eRedcap UE), and if it is not met, it is the cellbar.

If no downlink initial BWP is configured for the eRedcap UE in the SIB1, the specific-type terminal (e.g., the eRedcap UE) determines that the maximum downlink channel bandwidth supported by the specific-type terminal is greater than or equal to the downlink initial BWP configured for the second-type user (e.g., the downlink initial BWP configured for the eMBB or the downlink initial BWP configured for the R17 Redcap user), and if it is not met, it is the cellbar.

In scheme 2, for the eRedcap UE, the downlink initial BWP is configured by the SIB1-bis (the second-type system information block).

As an embodiment, N downlink initial BWPs (N is greater than or equal to 1) are configured for the eRedcap UE in the SIB1-bis, then the specific-type terminal determines that the maximum downlink channel bandwidth supported by the specific-type terminal is greater than or equal to all or any of the N downlink initial BWPs (N is greater than or equal to 1) configured for the specific-type user, and if it is not met, it is the cellbar.

As an embodiment, only if all of the downlink initial BWPs configured by the network are within the capability range of the terminal, the subsequent operation can be proceeded; otherwise, if at least one of the downlink initial BWPs configured by the network is not within the capability range of the terminal, the cellbar is considered.

As an embodiment, only if at least one of the downlink initial BWPs configured by the network is within the capability range of the terminal, the subsequent operation can be proceeded; otherwise, if all of the downlink initial BWPs configured by the network are not within the capability range of the terminal, the cellbar is considered.

Further, one uplink initial BWP configured for the eRedcap UE in the SIB1-bis is a mandatory configuration.

4. The terminal is required to simultaneously determine whether the maximum uplink channel bandwidth supported by the user is greater than or equal to the uplink initial BWP, and whether the maximum downlink channel bandwidth supported by the user is greater than or equal to the downlink initial BWP. If any of the directions is not met, i.e., the maximum uplink channel bandwidth supported by the user is less than the uplink initial BWP, or the maximum downlink channel bandwidth supported by the user is less than the downlink initial BWP, the cellbar is considered.

Only if the user satisfies both the requirement that the maximum uplink channel bandwidth supported by the user is greater than or equal to the initial uplink BWP and the requirement that the maximum downlink channel bandwidth supported by the user is greater than or equal to the downlink initial BWP, the user can proceed with making a combined determination with other determinations on whether to perform the cell bar. Because the bandwidth determination is only one step in determining whether access is allowed, there may be other subsequent steps involved. For example, whether the frequency band supported by the terminal is within the frequency band range indicated by the network. The bandwidth determination is one of the steps for determining whether access is allowed. As long as the determination result in the uplink bandwidth direction or the downlink bandwidth direction is not passed, the cell must be the cellbar.

5. Based on the above, if the specific-type terminal user obtains the configuration in the SIB1 or the SIB1-bis, and if the cellbar is obtained after the uplink determination or the downlink determination, the cell reselection behaviour at this time is as follows.

As an embodiment, for the specific-type terminal (e.g., the eRedcap UE), its cell reselection behaviour is the same as that for a non-specific-type terminal (e.g., the eMMB UE) (that is, according to the existing cell reselection switch, i.e., intraFreqReselection, in the MIB).

As an embodiment, for the specific-type terminal, its cell reselection behaviour is in accordance with a pre-agreed manner (protocol or hardcode manner) for cell reselection, i.e., pre-defined. That is, intra-frequency cell reselection is allowed, or intra-frequency cell reselection is not allowed.

As an embodiment, for the specific-type terminal (e.g., the eRedcap UE), its cell reselection behaviour is in accordance with the cell reselection identification configured in the SIB1 or SIB 1-bis for the specific-type terminal (e.g., for the eRedcap UE, there is an eRedcap specific IFRI) for cell reselection.

In a possible implementation, if the uplink or downlink initial BWP configuration is obtained from the SIB1, the determination is performed according to the SIB1; otherwise, the above process is performed according to the SIB1-bis for determination.

As a preferred embodiment, for the RedCap UE (e.g., the eRedCap UE) of the R18, it is required to determine whether the maximum uplink channel bandwidth supported by the specific-type user (e.g., the eRedCap UE) is greater than or equal to the uplink initial BWP, and it is required to determine whether the maximum downlink channel bandwidth supported by the specific-type user (e.g., the eRedCap UE) is greater than or equal to any one of the configured downlink initial BWPs (if more than one is configured) before proceeding with the subsequent operations, and if any of the above determinations is "no", the cellbar is considered.

Specifically, in TS 38.331, 5.2.2.4.2 Actions upon reception of the SIB1 is modified as follows.

If the UE supports the uplink channel bandwidth configured by the maximum transmission bandwidth configuration, and the uplink channel bandwidth is less than or equal to the carrier bandwidth (the carrier bandwidth may be indicated in the uplinkConfigCommon field, the uplinkConfigCommon field is associated with the carrier interval of the initial uplink BWP, and the initial uplink BWP may be associated with the RedCap UE), and the uplink channel bandwidth is greater than or equal to the initial uplink BWP, the initial uplink BWP may be configured for the RedCap UE (optional if configured), or for the eRedCap UE (for the eRedCap UE, the initial uplink BWP with which the support capability of the terminal is compared is one eRedCap initial uplink BWP configured for the eRedCap UE).

And, if the UE supports the downlink channel bandwidth configured by the maximum transmission bandwidth configuration, and the downlink channel bandwidth is less than or equal to the carrier bandwidth (the carrier bandwidth may be indicated in the downlinkConfigCommon field, the downlinkConfigCommon field is associated with the carrier interval of the initial uplink BWP, and the initial uplink BWP may be associated with the RedCap UE), and the downlink channel bandwidth is greater than or equal to the initial downlink BWP, the initial downlink BWP may be configured for the RedCap UE (optional if configured), or for the eRedCap UE (for the eRedCap UE, the initial downlink BWP with which the support capability of the terminal is compared is any one of eRedCap initial downlink BWPs configured for the eRedCap UE).

If so, the subsequent steps are performed.

Otherwise, it is determined that the cell does not allow the access.

A preferred embodiment for the above process is given below.

As a preferred embodiment, in TS38.331, 5.2.2.4.2 Actions upon reception of the SIB1 is modified as follows. (That is, for the Redcap user of the R18, it is required to determine whether the maximum uplink channel bandwidth supported by the specific-type user is greater than or equal to the uplink initial BWP, and it is required to determine whether the maximum downlink channel bandwidth supported by the specific-type user is greater than or equal to any one of the configured downlink initial BWPs (if more than one is configured) before proceeding with the subsequent operations, otherwise, the else part will be processed, i.e., the cellbar is considered.) The omitted part is the same as the existing protocol description.
-> If the UE supports the uplink channel bandwidth configured by the maximum transmission bandwidth configuration (e.g., TS 38.101-1 [15] and TS 38.101-2 [39])
   - the uplink channel bandwidth is less than or equal to the carrier bandwidth (the carrier bandwidth may be indicated in the uplinkConfigCommon field, the uplinkConfigCommon field is associated with the carrier interval of the initial uplink BWP, or the initial uplink BWP may be associated with the RedCap UE (if configured)), and
   - the uplink channel bandwidth is greater than or equal to the initial uplink BWP, and the initial uplink BWP may be configured for the RedCap UE (optional if configured) or the eRedCap UE (for the eRedCap UE, the initial uplink BWP with which the support capability of the terminal is compared is one eRedCap initial uplink BWP configured for the eRedCap UE); and
> if the UE supports the downlink channel bandwidth configured by the maximum transmission bandwidth configuration (e.g., TS 38.101-1 [15] and TS 38.101-2 [39]),
   - the downlink channel bandwidth is less than or equal to the carrier bandwidth (the carrier bandwidth may be indicated in the downlinkConfigCommon field, the downlinkConfigCommon field is associated with the carrier interval of the initial uplink BWP or the initial uplink BWP may be associated with the RedCap UE (if configured)), and
   - the downlink channel bandwidth is greater than or equal to the initial downlink BWP, the initial downlink BWP may be configured for the RedCap UE (optional if configured) or the eRedCap UE (for the eRedCap UE, the initial downlink BWP with which the support capability of the terminal is compared is one of eRedCap initial downlink BWPs configured for the eRedCap UE),
...( omit specific execution content),
> otherwise,
> it is determined that the cell does not allow the access (according to TS 38.304 [20])
**...**

As shown in FIG. 8, the embodiments of the present disclosure provide an information transmission apparatus 100, arranged in a base station, including:
a transceiver module 110, configured to send initial BWP configuration information indicative of an initial BWP of a target cell, where the initial BWP is used for a first-type UE to compare the initial BWP with a maximum channel bandwidth supported by the first-type UE, and determine, at least based on a comparison result, whether the target cell allows access of the first-type UE, and the maximum channel bandwidth supported by the first-type UE is less than a maximum channel bandwidth supported by a second-type UE.

In an embodiment, when the maximum channel bandwidth supported by the first-type UE is less than the initial BWP, the target cell does not allow the access of the first-type UE.

In an embodiment, the initial BWP includes at least one of the following:
an initial BWP for the first-type UE;
an initial BWP for the second-type UE.

In an embodiment, the transceiver module 110 is specifically configured to perform at least one of the following:
sending a first-type system information block carrying the initial BWP configuration information, where the initial BWP configuration information is used for indicating the initial BWP for the first-type UE, and/or the initial BWP for the second-type UE;
sending a second-type system information block carrying the initial BWP configuration information, where the initial BWP configuration information is used for indicating the initial BWP for the first-type UE.

In an embodiment, the first-type system information block includes cell intra-frequency reselection identification information indicative of a cell reselection operation associated with the first-type UE; and/or
the second-type system information block includes cell intra-frequency reselection identification information indicative of a cell reselection operation associated with the first-type UE;
where the cell reselection operation includes whether intra-frequency cell reselection is allowed.

In an embodiment, the initial BWP includes an uplink initial BWP, where the uplink initial BWP is used at least for the first-type UE to compare the uplink initial BWP with a maximum uplink channel bandwidth supported by the first-type UE, and determine, based on a comparison result, whether the target cell allows the access of the first-type UE; and/or
the initial BWP includes a downlink initial BWP, where the downlink initial BWP is used at least for the first-type UE to compare the downlink initial BWP with a maximum downlink channel bandwidth supported by the first-type UE, and determine, based on a comparison result, whether the target cell allows the access of the first-type UE.

In an embodiment, the first-type UE includes an enhanced reduced capability UE.

As shown in FIG. 9, the embodiments of the present disclosure provide an information transmission apparatus 200, arranged in a first-type UE, including:
a transceiver module 210, configured to receive initial BWP configuration information indicative of an initial BWP of a target cell, where the initial BWP is used for the first-type UE to compare the initial BWP with a maximum channel bandwidth supported by the first-type UE, and determine, at least based on a comparison result, whether the target cell allows access of the first-type UE, and the maximum channel bandwidth supported by the first-type UE is less than a maximum channel bandwidth supported by a second-type UE.

In an embodiment, the apparatus further includes a processing module 220 configured to:
determine, in response to the maximum channel bandwidth supported by the first-type UE being less than the initial BWP, that the target cell does not allow the access of the first-type UE.

In an embodiment, the initial BWP includes at least one of the following:
an initial BWP for the first-type UE;
an initial BWP for the second-type UE.

In an embodiment, the transceiver module 210 is configured to perform at least one of the following:
receiving a first-type system information block carrying the initial BWP configuration information, where the initial BWP configuration information is used for indicating the initial BWP for the first-type UE, and/or the initial BWP for the second-type UE;
receiving a second-type system information block carrying the initial BWP configuration information, where the initial BWP configuration information is used for indicating the initial BWP for the first-type UE.

In an embodiment, the initial BWP includes an uplink initial BWP, where the uplink initial BWP is used at least for the first-type UE to compare the uplink initial BWP with a maximum uplink channel bandwidth supported by the first-type UE, and determine, based on a comparison result, whether the target cell allows the access of the first-type UE; and/or
the initial BWP includes a downlink initial BWP, where the downlink initial BWP is used at least for the first-type UE to compare the downlink initial BWP with a maximum downlink channel bandwidth supported by the first-type UE, and determine, based on a comparison result, whether the target cell allows the access of the first-type UE.

In an embodiment, the transceiver module 210 is further configured to perform at least one of the following:
performing a cell reselection operation based on cell intra-frequency reselection identification information associated with the first-type UE;
performing a cell reselection operation based on a preset rule;
where the cell reselection operation includes intra-frequency cell reselection or non-intra-frequency cell reselection.

In an embodiment, the cell intra-frequency reselection identification information is carried in one of the following:
a first-type system information block; and/or a second system information block.

In an embodiment, the preset rule is specified by a communication protocol, and/or pre-programmed.

In an embodiment, the first-type UE includes an enhanced reduced capability UE.

The embodiments of the present disclosure provide a communication device, including:
a processor; and
a memory, configured to store an executable instruction of the processor; where
the processor, when running the executable instruction, is configured to implement the information transmission method of any embodiment of the present disclosure.

In an embodiment, the communication device may include, but is not limited to, at least one of the following: a UE and a network device. The network device here may include a core network or an access network function, etc. Here, the access network function may include a base station. The core network may include an AMF and an SMF.

In some embodiments, the processor may include various types of storage media, where the storage media are non-transitory computer storage media capable of continuing to memorize information stored thereon after the UE is powered down.

The processor may be connected to the memory via a bus or the like for reading an executable program stored in the memory, for example, at least one of the methods shown in FIGS. 3 to 7.

The embodiments of the present disclosure also provide a computer storage medium. The computer storage medium stores an executable program of a computer. The executable program, when executed by a processor, implements the information transmission method of any embodiment of the present disclosure, for example, at least one of the methods shown in FIGS. 3 to 7.

With respect to the device or storage medium in the above embodiments, the specific manner in which each module performs an operation has been described in detail in the embodiments relating to the method, and will not be described in detail here.

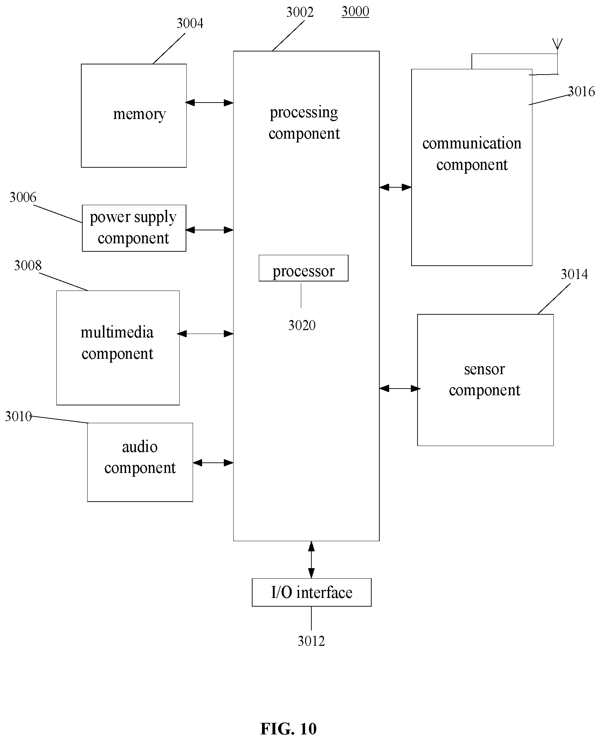

FIG. 10 is a block diagram of a UE 3000 illustrated according to an exemplary embodiment. For example, the UE 3000 may be a mobile phone, a computer, a digital broadcast user equipment, a message transceiver device, a game console, a tablet device, a medical device, a fitness device, or a personal digital assistant.

Referring to FIG. 10, the UE 3000 may include one or more of the following components: a processing component 3002, a memory 3004, a power supply component 3006, a multimedia component 3008, an audio component 3010, an input/output (I/O) interface 3012, a sensor component 3014, and a communication component 3016.

The processing component 3002 generally controls the overall operation of the UE 3000, such as operations associated with display, telephone calls, data communication, camera operations, and recording operations. The processing component 3002 may include one or more processors 3020 to execute an instruction to complete all or part of the steps of the method described above. In addition, the processing component 3002 may include one or more modules that facilitate interaction between the processing component 3002 and other components. For example, the processing component 3002 may include a multimedia module to facilitate interaction between the multimedia component 3008 and the processing component 3002.

The memory 3004 is configured to store various types of data to support the operations on the UE 3000. Examples of such data include the following: an instruction of any application program or method operated on the UE 3000, contact data, phonebook data, messages, pictures, videos, etc. The memory 3004 may be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a disk, or a CD-ROM.

The power supply component 3006 supplies power to various components of the UE 3000. The power supply component 3006 may include a power supply management system, one or more power supplies, and other components associated with generating, managing and distributing power for the UE 3000.

The multimedia component 3008 includes a screen that provides an output interface between the UE 3000 and a user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touches, swipes, and gestures on the touch panel. The touch sensor may not only sense the boundaries of the touch or swipe action, but also detect the duration and pressure associated with the touch or swipe operation. In some embodiments, the multimedia component 3008 includes a front-facing camera and/or a rear-facing camera. The front-facing camera and/or the rear-facing camera may receive external multimedia data when the UE 3000 is in an operating mode, such as a shooting mode or a video mode. Each of the front-facing camera and the rear-facing camera may be a fixed optical lens system or have a focal length and optical zoom capability.

The audio component 3010 is configured to output and/or input audio signals. For example, the audio component 3010 includes a microphone (MIC), configured to receive external audio signals when the UE 3000 is in an operating mode, such as a calling mode, a recording mode and a voice recognition mode. The received audio signals may be further stored in the memory 3004 or sent via the communication component 3016. In some embodiments, the audio component 3010 further includes a speaker for outputting the audio signals.

The I/O interface 812 provides an interface between the processing component 3002 and a peripheral interface module, and the peripheral interface module may be a keypad, a click wheel, a button, etc. These buttons may include, but are not limited to, a home button, a volume button, a start button, and a lock button.

The sensor component 3014 includes one or more sensors configured to provide status assessment of various aspects of the UE 3000. For example, the sensor component 3014 may detect an open/closed state of the device 3000, relative positioning of the components, for example, the components are the display and small keypad of the UE 3000. The sensor component 3014 may also detect a change in the position of the UE 3000 or a change in the position of one component of the UE 3000, the presence or absence of contact between the user and the UE 3000, the orientation or acceleration/deceleration of UE 3000, and temperature changes of the UE 3000. The sensor component 3014 may include a proximity sensor that is configured to detect the presence of nearby objects in the absence of any physical contact. The sensor component 3014 may also include a light sensor, such as a CMOS or CCD image sensor, for use in imaging applications. In some embodiments, the sensor component 3014 may also include an accelerometer sensor, a gyroscope sensor, a magnetic sensor, a pressure sensor, or a temperature sensor.

The communication component 3016 is configured to facilitate the communication between the UE 3000 and other devices in wired or wireless manners. The UE 3000 may access a wireless network based on a communication standard, such as WiFi, 4G, 5G, or a combination thereof. In an exemplary embodiment, the communication component 3016 receives broadcast signals or broadcast related information from an external broadcast management system via a broadcast channel. In an exemplary embodiment, the communication component 816 further includes a near-field communication (NFC) module to facilitate short-range communication. For example, the NFC module may be implemented based on the radio frequency identification (RFID) technology, the infrared data association (IrDA) technology, the ultra-wideband (UWB) technology, the Bluetooth (BT) technology, or other technologies.

In an exemplary embodiment, the UE 3000 may be implemented by one or more of the following: an application-specific integrated circuit (ASIC), a digital signal processor (DSP), a digital signal processing device (DSPD), a programmable logic device (PLD), a field-programmable gate array (FPGA), a controller, a microcontroller, a microprocessor, or other electronic elements, to perform the method described above.

In an exemplary embodiment, a non-transitory computer-readable storage medium including an instruction is provided, such as the memory 3004 including an instruction. The instruction described above is capable of being executed by the processor 3020 of the UE 3000 to complete the method described above. For example, the non-transitory computer-readable storage medium may be an ROM, a random access memory (RAM), a CD-ROM, a magnetic tape, a floppy disk, or an optical data storage device.

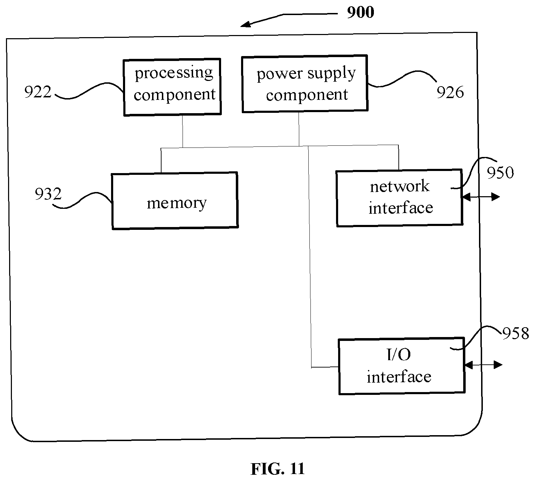

As shown in FIG. 11, an embodiment of the present disclosure illustrates a structure of a base station. For example, the base station 900 may be provided as a network side device. Referring to FIG. 11, the base station 900 includes a processing component 922, where the processing component 922 further includes one or more processors, and a memory resource represented by a memory 932 for storing an instruction, such as an application program, that is executable by the processing component 922. The application program stored in the memory 932 may include one or more modules each corresponding to a set of instructions. In addition, the processing component 922 is configured to execute the instruction to perform any method described above applied to the base station.

The base station 900 may further include a power supply component 926 configured to perform power management of the base station 900, a wired or wireless network interface 950 configured to connect the base station 900 to the network, and an I/O interface 958. The base station 900 may operate an operating system stored in the memory 932, such as Windows Server TM, Mac OS XTM, UnixTM, LinuxTM, FreeBSDTM, or the like.

After considering the specification and practicing the invention disclosed herein, those skilled in the art will easily come up with other implementation solutions of the present invention. The present disclosure is intended to cover any variations, uses or adaptive changes of the present invention, and the variations, uses or adaptive changes follow the general principles of the present invention and include common knowledge or commonly used technical means in the technical field that is not disclosed in the present disclosure. The specification and embodiments are only considered to be exemplary, and the true scope and spirit of the present invention are indicated by the following claims.

It should be understood that the present invention is not limited to the precise structure which has been described above and illustrated in the accompanying drawings, and that various modifications and alterations may be made without departing from the scope of the present invention. The scope of the present invention is limited only by the appended claims.

## Claims

1. An information transmission method, performed by a base station, comprising:
sending initial bandwidth part (BWP) configuration information indicative of an initial BWP of a target cell, wherein the initial BWP is used for a first-type user equipment (UE) to compare the initial BWP with a maximum channel bandwidth supported by the first-type UE, and determine, at least based on a comparison result, whether the target cell allows access of the first-type UE, and the maximum channel bandwidth supported by the first-type UE is less than a maximum channel bandwidth supported by a second-type UE.

2. The method according to claim 1, wherein when the maximum channel bandwidth supported by the first-type UE is less than the initial BWP, the target cell does not allow the access of the first-type UE.

3. The method according to claim 1, wherein the initial BWP comprises at least one of:
an initial BWP for the first-type UE; and
an initial BWP for the second-type UE.

4. The method according to claim 3, wherein the sending the initial BWP configuration information indicative of the initial BWP of the target cell comprises at least one of:
sending a first-type system information block carrying the initial BWP configuration information, wherein the initial BWP configuration information is used for indicating the initial BWP for the first-type UE, and/or the initial BWP for the second-type UE; and
sending a second-type system information block carrying the initial BWP configuration information, wherein the initial BWP configuration information is used for indicating the initial BWP for the first-type UE.

5. The method according to claim 4, wherein the first-type system information block comprises cell intra-frequency reselection identification information indicative of a cell reselection operation associated with the first-type UE; and/or
the second-type system information block comprises cell intra-frequency reselection identification information indicative of a cell reselection operation associated with the first-type UE;
wherein the cell reselection operation comprises whether intra-frequency cell reselection is allowed.

6. The method according to any one of claims 1 to 5, wherein the initial BWP comprises an uplink initial BWP, wherein the uplink initial BWP is used at least for the first-type UE to compare the uplink initial BWP with a maximum uplink channel bandwidth supported by the first-type UE, and determine, based on a comparison result, whether the target cell allows the access of the first-type UE; and/or
the initial BWP comprises a downlink initial BWP, wherein the downlink initial BWP is used at least for the first-type UE to compare the downlink initial BWP with a maximum downlink channel bandwidth supported by the first-type UE, and determine, based on a comparison result, whether the target cell allows the access of the first-type UE.

7. The method according to any one of claims 1 to 5, wherein the first-type UE comprises an enhanced reduced capability UE.

8. An information transmission method, performed by a first-type user equipment (UE), comprising:
receiving initial bandwidth part (BWP) configuration information indicative of an initial BWP of a target cell, wherein the initial BWP is used for the first-type UE to compare the initial BWP with a maximum channel bandwidth supported by the first-type UE, and determine, at least based on a comparison result, whether the target cell allows access of the first-type UE, and the maximum channel bandwidth supported by the first-type UE is less than a maximum channel bandwidth supported by a second-type UE.

9. The method according to claim 8, wherein the method further comprises:
determining, in response to the maximum channel bandwidth supported by the first-type UE being less than the initial BWP, that the target cell does not allow the access of the first-type UE.

10. The method according to claim 8, wherein the initial BWP comprises at least one of:
an initial BWP for the first-type UE; and
an initial BWP for the second-type UE.

11. The method according to claim 10, wherein the receiving the initial BWP configuration information indicative of the initial BWP of the target cell comprises at least one of:
receiving a first-type system information block carrying the initial BWP configuration information, wherein the initial BWP configuration information is used for indicating the initial BWP for the first-type UE, and/or the initial BWP for the second-type UE; and
receiving a second-type system information block carrying the initial BWP configuration information, wherein the initial BWP configuration information is used for indicating the initial BWP for the first-type UE.

12. The method according to any one of claims 8 to 11, wherein the initial BWP comprises an uplink initial BWP, wherein the uplink initial BWP is used at least for the first-type UE to compare the uplink initial BWP with a maximum uplink channel bandwidth supported by the first-type UE, and determine, based on a comparison result, whether the target cell allows the access of the first-type UE; and/or
the initial BWP comprises a downlink initial BWP, wherein the downlink initial BWP is used at least for the first-type UE to compare the downlink initial BWP with a maximum downlink channel bandwidth supported by the first-type UE, and determine, based on a comparison result, whether the target cell allows the access of the first-type UE.

13. The method according to any one of claims 8 to 11, wherein the method further comprises one of:
performing a cell reselection operation based on cell intra-frequency reselection identification information associated with the first-type UE; and
performing a cell reselection operation based on a preset rule;
wherein the cell reselection operation comprises intra-frequency cell reselection or non-intra-frequency cell reselection.

14. The method according to claim 13, wherein the cell intra-frequency reselection identification information is carried in one of:
a first-type system information block; and/or
a second system information block.

15. The method according to claim 13, wherein the preset rule is specified by a communication protocol, and/or pre-programmed.

16. The method according to any one of claims 8 to 11, wherein the first-type UE comprises an enhanced reduced capability UE.

17. An information transmission apparatus, performed by a base station, comprising:
a transceiver module, configured to send initial bandwidth part (BWP) configuration information indicative of an initial BWP of a target cell, wherein the initial BWP is used for a first-type user equipment (UE) to compare the initial BWP with a maximum channel bandwidth supported by the first-type UE, and determine, at least based on a comparison result, whether the target cell allows access of the first-type UE, and the maximum channel bandwidth supported by the first-type UE is less than a maximum channel bandwidth supported by a second-type UE.

18. An information transmission apparatus, performed by a first-type user equipment (UE), comprising:
a transceiver module, configured to receive initial bandwidth part (BWP) configuration information indicative of an initial BWP of a target cell, wherein the initial BWP is used for the first-type UE to compare the initial BWP with a maximum channel bandwidth supported by the first-type UE, and determine, at least based on a comparison result, whether the target cell allows access of the first-type UE, and the maximum channel bandwidth supported by the first-type UE is less than a maximum channel bandwidth supported by a second-type UE.

19. A communication device, wherein the communication device comprises:
a processor; and
a memory, configured to store an executable instruction of the processor; wherein
the processor, when running the executable instruction, is configured to implement the information transmission method according to any one of claims 1 to 7 or 8 to 16.

20. A computer storage medium, wherein the computer storage medium stores an executable program of a computer, and the executable program, when executed by a processor, implements the information transmission method according to any one of claims 1 to 7 or 8 to 16.
